(19) **Europäisches Patentamt** / **European Patent Office** / **Office européen des brevets**

(11) **EP 2 875 385 B1**

(12) **FASCICULE DE BREVET EUROPEEN**

(45) Date de publication et mention
de la délivrance du brevet:
**28.03.2018 Bulletin 2018/13**

(21) Numéro de dépôt: **13744698.5**

(22) Date de dépôt: **05.07.2013**

(51) Int Cl.:
**G01S 13/92** *(2006.01)*     **G08G 1/052** *(2006.01)*

(86) Numéro de dépôt international:
**PCT/FR2013/051605**

(87) Numéro de publication internationale:
**WO 2014/013159 (23.01.2014 Gazette 2014/04)**

(54) **PROCEDE D'INSTALLATION D'UN CINEMOMETRE SUR UNE ROUTE EN VIRAGE**

VERFAHREN ZUR INSTALLATION EINER GESCHWINDIGKEITSERKENNUNGSVORRICHTUNG AUF EINER GEWUNDENEN STRASSE

METHOD FOR INSTALLING A SPEED-DETECTION DEVICE ON A WINDY ROAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2012 FR 1257074**

(43) Date de publication de la demande:
**27.05.2015 Bulletin 2015/22**

(73) Titulaire: **Morpho**
**92130 Issy-les-Moulineaux (FR)**

(72) Inventeur: **GUIDON, Eric**
**F-92130 Issy Les Moulineaux (FR)**

(74) Mandataire: **Cabinet Plasseraud**
**66, rue de la Chaussée d'Antin**
**75440 Paris Cedex 09 (FR)**

(56) Documents cités:
**EP-A1- 1 528 409     FR-A1- 2 949 896**

**Description**

La présente invention concerne un procédé d'installation d'un cinémomètre de contrôle routier. Elle concerne aussi un procédé de mesure d'une vitesse d'un véhicule.

La mesure de la vitesse d'un véhicule qui circule sur une route nécessite de connaître précisément un angle entre un axe de mesure et la direction de déplacement du véhicule au moment de la mesure. Cet angle est appelé dans la suite angle de mesure. Par ailleurs, on suppose que la direction de déplacement du véhicule suit une direction longitudinale de la route. Autrement dit, la vitesse est mesurée pendant que le véhicule reste dans la même voie de circulation sur la route.

Le constructeur du cinémomètre peut recommander une valeur-cible pour l'angle de mesure, par exemple 25°. L'installation du cinémomètre près de la route doit alors respecter cette valeur-cible.

La vitesse du véhicule est ensuite déduite de la mesure effectuée par une méthode qui est connue en soi, par exemple par quantification d'effet Doppler, et de la valeur de l'angle de mesure.

Des recommandations doivent être appliquées lors de l'installation du cinémomètre, afin que la mesure de la vitesse soit faite avec un niveau de confiance élevé. De telles recommandations peuvent être extraites établies à partir du Guide OIML G 1-100, édition 2008 de l'Organisation Internationale de Métrologie Légale, ou de la norme française NF ISO 5735, par exemple.

Or, les procédés d'installation qui sont actuellement mis en oeuvre sur les bords de routes tel le procédé divulgué dans la demande FR2949896, ne permettent de satisfaire les recommandations précitées que lorsque la route sur laquelle la vitesse du véhicule est mesurée peut être considérée comme sensiblement droite, ou rectiligne. En effet, en dessous d'un certain rayon de courbure de la route, c'est-à-dire dans les virages, la direction de déplacement du véhicule ne peut plus être considérée comme constante. Les recommandations rappelées ci-dessus ne sont alors plus respectées, et la mesure de la vitesse du véhicule risque d'être invalidée.

Un but de la présente invention consiste donc à proposer un nouveau procédé d'installation d'un cinémomètre de contrôle routier, qui permette de respecter les recommandations lorsque la route forme un virage.

Un autre but de l'invention consiste à installer le cinémomètre pour une telle configuration de la route, c'est-à-dire avec virage, de façon simple, rapide et sans nécessiter de moyens complexes pour un opérateur de cette installation.

A cet effet, selon un premier objet, l'invention propose un procédé d'installation d'un cinémomètre sur une route comportant au moins une voie, le cinémomètre ayant un axe radioélectrique pour mesurer une vitesse d'au moins un véhicule circulant sur la voie de la route et coupant un faisceau de mesure réparti autour de l'axe radioélectrique, et le cinémomètre étant rigidement solidaire d'un système de visée avec une ligne de visée qui forme un angle de montage fixe avec l'axe radioélectrique. Le procédé comprend les étapes suivantes :

/1/ obtenir une valeur maximale d'écart angulaire ;

/2/ placer le cinémomètre à une distance d'écartement latéral par rapport à une bande de rive de la route ;

/3/ placer au moins une marque sur le bord de la route à une distance supérieure à 15 m (mètre) du cinémomètre ; et

/4/ orienter le cinémomètre de sorte que la ligne de visée passe par la marque, et l'axe radioélectrique formant alors un angle de mesure avec une ligne de passage du véhicule sur la voie de la route à un endroit d'intersection entre cet axe radioélectrique et la ligne de passage.

Pour l'application de l'invention, la route forme un virage tel qu'un écart entre l'angle de mesure et l'angle de montage serait supérieur à la valeur maximale d'écart angulaire si la marque était placée à la même distance d'écartement latéral de la bande de rive que le cinémomètre.

Selon l'invention, le procédé comprend en outre, préalablement à l'étape /3/, une étape de détermination d'un axe de référence pour repérer une direction longitudinale de la route à l'endroit d'intersection entre cet axe radioélectrique et la ligne de passage, en fonction du rayon de courbure du virage, et la marque est placée à l'étape /3/ de sorte qu'à l'étape /4/, lorsque la ligne de visée passe par la marque, cette ligne de visée est parallèle à l'axe de référence, et l'écart entre l'angle de mesure et l'angle de montage devient inférieur à la valeur maximale d'écart angulaire.

L'axe de référence qui est introduit par l'invention permet de représenter de manière simple et fiable la direction de la vitesse du véhicule. La méthode utilisée avant l'invention pour orienter le cinémomètre peut ensuite être reprise à partir de cet axe de référence. Cette méthode reste donc commune aux configurations des routes rectilignes et des routes en virages, et seul l'axe de référence qui est utilisé dans chaque cas est adapté à chaque configuration de route : rectiligne ou à virage plus ou moins serré.

Selon un mode de mise en oeuvre préféré de l'invention, la direction longitudinale de la route à l'endroit d'intersection entre l'axe radioélectrique et la ligne de passage peut être repérée par la tangente à cette ligne de passage à cet endroit d'intersection. Ainsi, au moins lorsque la route ne comporte qu'une seule voie, l'axe de référence peut être précisément colinéaire au vecteur de vitesse du véhicule à l'endroit où la mesure de la vitesse est réalisée. Toutefois, des méthodes alternatives peuvent être utilisées pour repérer l'axe de référence, par exemple basées sur un tracé d'une ou plusieurs cordes de la route.

La route peut comporter plusieurs voies de circulation adjacentes dans lesquelles les vitesses de véhicules sont destinées à être mesurées. L'axe de référence est alors déterminé de sorte que l'écart entre l'angle de montage et l'angle de mesure soit inférieur à la valeur maximale d'écart angulaire simultanément pour plusieurs lignes de passage de véhicules qui sont contenues respectivement dans certaines au moins des voies de circulation. En d'autres termes, l'étape de détermination de l'axe de référence comprend alors une opération d'optimisation dans laquelle l'écart entre l'angle de montage et l'angle de mesure est inférieur à la valeur maximale d'écart angulaire simultanément pour plusieurs lignes de passage de véhicules contenues respectivement dans certaines au moins des voies de circulation. Le procédé permet ainsi de mesurer de manière fiable et exacte la vitesse de plusieurs véhicules qui croisent l'axe radioélectrique dans des voies de circulation différentes, en satisfaisant simultanément pour ces voies des recommandations telles que celles on été rappelées en introduction. En particulier, ce perfectionnement de l'invention peut être appliqué lorsque la route comporte au moins quatre voies de circulation adjacentes dans lesquelles les vitesses de véhicules sont destinées à être mesurées.

L'axe de référence peut avantageusement être déterminé de sorte que, pour chaque ligne de passage de véhicule sur la route, une somme de l'écart entre l'angle de mesure et l'angle de montage d'une part, et d'une incertitude composée élargie, qui correspond au produit d'une incertitude composée par un coefficient de niveau de confiance, d'autre part, soit inférieure à la valeur maximale d'écart angulaire. En d'autres termes, l'étape de détermination de l'axe de référence peut comprendre, pour chaque ligne de passage de véhicule sur la route, la détermination d'une somme de l'écart entre l'angle de mesure et l'angle de montage d'une part, et d'une incertitude composée élargie correspondant au produit d'une incertitude composée par un coefficient de niveau de confiance d'autre part, cette somme étant inférieure à la valeur maximale d'écart angulaire. Ainsi, l'invention peut être combinée avec une approche statistique de l'incertitude sur la détermination de l'angle de mesure, en fonction d'un ou plusieurs paramètres qui sont à l'origine de cette incertitude.

Ladite au moins une marque peut comprendre une marque unique, qui est placée à la distance supérieure ou égale à 15 m par rapport au cinémomètre. La mise en oeuvre du procédé peut ainsi être simple et rapide. Alternativement, des marques intermédiaires peuvent être utilisées pour déterminer l'emplacement de la marque vers laquelle est orientée la ligne de visée du système de visée.

L'invention peut être appliquée de façon particulièrement avantageuse lorsque le rayon de courbure du virage est inférieur à 3,8 km (kilomètre), 5,4 km, 7,0 km ou 8,6 km respectivement lorsque la route comporte une seule voie, deux voies, trois voies ou quatre voies dans lesquelles la vitesse du véhicule est destinée à être mesurée. En effet, pour de telles configurations de routes à virages, les procédés de l'état de la technique qui sont adaptés pour des routes rectilignes ne permettent plus d'obtenir un écart entre l'angle de mesure et l'angle de montage, qui soit inférieur à la valeur maximale d'écart angulaire.

Selon un mode de mise en oeuvre préféré de l'invention, l'axe de référence peut être déterminé à partir de deux points qui sont placés sur la bande de rive. La distance entre ces deux points peut alors être sélectionnée en utilisant une table dont une entrée est constituée par une valeur du rayon de courbure du virage, ou par une valeur de grandeur représentative de ce rayon de courbure. En d'autres termes, l'étape de détermination de l'axe de référence peut comprendre une opération de construction de deux points, lesdits deux points étant placés sur la bande de rive. Un premier point initial est préalablement placé. Une distance entre lesdits deux points est alors sélectionnée en fonction du rayon de courbure du virage, ou en fonction d'une valeur de grandeur représentative dudit rayon de courbure. Ainsi, l'opérateur peut simplement, à partir de la connaissance du rayon de courbure de la route ou de la grandeur équivalente à ce rayon de courbure, construire l'axe de référence. Eventuellement, l'axe de référence peut directement passer par les deux points qui sont placés sur la bande de rive.

Le nombre de voies de la route peut constituer une autre entrée de la table qui est utilisée pour sélectionner la distance entre les deux points de la bande de rive qui déterminent l'axe de référence. En d'autres termes, dans l'opération de construction des deux points, la distance entre lesdits deux points peut également être sélectionnée en fonction du nombre de voies de la route

Notamment, l'axe de référence peut être déterminé à partir d'un point initial qui est situé sur la bande de rive, ce point initial étant tel qu'un angle entre d'une part une première direction perpendiculaire à la bande de rive et passant par le cinémomètre, et d'autre part une seconde direction passant par le cinémomètre et le point initial, soit substantiellement complémentaire de l'angle de montage augmenté d'une demi-ouverture angulaire du faisceau de mesure. Une telle position du point initial est proche de l'endroit sur la route où la vitesse des véhicules sera mesurée, notamment lorsque le rayon de courbure de la route est grand.

Le rayon de courbure de la route peut être déterminé dans une étape préalable du procédé de l'invention, à partir d'une mesure de flèche entre la bande de rive et une corde de cette bande de rive dans le virage. La valeur réelle du rayon de courbure de la route peut ainsi être évaluée de manière simple, une flèche de l'ordre de quelques mètres correspondant à un rayon de courbure de quelques kilomètres.

Avantageusement, la corde qui est utilisée pour déterminer le rayon de courbure de la route peut passer par le même point initial que celui qui est utilisé pour l'axe de référence. Le nombre de points différents qui sont nécessaires sur la route pour mettre en oeuvre l'invention, et donc aussi le nombre de marques à placer, peut ainsi être réduit.

L'angle de montage entre la ligne de visée du système de visée et l'axe radioélectrique du cinémomètre peut être compris par exemple entre 20° et 30°.

Selon un deuxième objet, l'invention propose en outre un procédé de mesure d'une vitesse d'un véhicule qui circule sur une route, ce procédé comprenant les étapes suivantes :

- installer un cinémomètre en utilisant un procédé d'installation tel que décrit ci-dessus ; et

- réaliser la mesure de vitesse en utilisant le cinémomètre tel que placé à l'étape /2/ du procédé d'installation et orienté à l'étape /4/ du même procédé d'installation.

D'autres particularités et avantages de la présente invention apparaîtront dans la description ci-après d'exemples de mise en oeuvre non limitatifs, en référence aux dessins annexés, dans lesquels :

- la figure 1 est un schéma de principe qui illustre un procédé d'installation d'un cinémomètre de contrôle routier selon l'état de la technique, dans le cas où la route est droite ;

- la figure 2 est un schéma de principe qui illustre un procédé selon l'invention pour l'installation d'un cinémomètre de contrôle routier dans le cas où la route comporte un virage et ne comporte qu'une voie unique de circulation de véhicules ; et

- la figure 3 correspond à la figure 2 pour une route qui comporte quatre voies.

Pour des raisons de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

L'invention peut être appliquée à un cinémomètre routier à effet Doppler. Le principe d'un tel cinémomètre est largement connu, si bien qu'il suffit de rappeler que ce type de cinémomètre fournit le résultat d'une mesure de la composante de la vitesse d'un véhicule qui est parallèle à un axe radioélectrique du cinémomètre. Le cinémomètre est référencé 10 dans les figures, et son axe radioélectrique est référencé 11.

La route 100 peut être constituée d'une ou de plusieurs voies de circulation. Un véhicule 30 dont la vitesse est destinée à être mesurée par le cinémomètre 10 peut se trouver indifféremment sur l'une des voies.

Le cinémomètre 10 est solidaire d'un système de visée 13 ayant une ligne de visée 12, qui peut être par exemple un faisceau laser ou simplement une ligne de visée optique. L'axe radioélectrique 11 et la ligne de visée 12 forment un angle θ de montage fixe, en général compris entre 20° (degré) et 30°, et par exemple égal à 25°. La valeur de l'angle θ de montage est régulièrement vérifiée et étalonnée si besoin.

La vitesse du véhicule 30 est mesurée par le cinémomètre 10 lorsque le véhicule 30 coupe un champ de mesure qui est réparti autour de l'axe radioélectrique 11. Pour un cinémomètre à effet Doppler, le champ de mesure est limité transversalement par l'ouverture du faisceau d'émission radioélectrique du cinémomètre 10.

La composante de la vitesse du véhicule 30 qui est mesurée par le cinémomètre 10 à effet Doppler est donc la projection orthogonale $V_x$ du vecteur de vitesse V du véhicule sur l'axe radioélectrique 11. Cette composante $V_x$ reste la grandeur qui est mesurée par le cinémomètre 10 quelle que soit la configuration de la route 100 et la position du cinémomètre 10 par rapport à la route 100.

L'angle β, dit angle de mesure, est l'angle entre le vecteur de vitesse V du véhicule 30 et l'axe 11 radioélectrique. Cet angle β de mesure est contenu en général dans un plan horizontal lorsque le cinémomètre 10 est installé sur le bord de la route 100 sensiblement à la hauteur du véhicule 30.

La vitesse V du véhicule 30 est alors calculée en divisant le résultat de la mesure de la composante $V_x$ par le cosinus de l'angle β de mesure. La précision du résultat de la mesure de vitesse dépend donc en partie de l'incertitude avec laquelle l'angle β de mesure est connu. Cette incertitude peut être limitée par une valeur maximale pour que la mesure de vitesse soit considérée comme étant valide, en fonction de dispositions réglementaires nationales notamment. Par exemple, cette incertitude doit être inférieure à 0,5° en France. Cette valeur maximale de l'incertitude est appelée valeur maximale d'écart angulaire dans la partie générale de la présente description.

Dans certains procédés d'installation de cinémomètre qui sont connus de l'art antérieur, et lorsque la route 100 est droite, ou rectiligne, l'angle β de mesure est supposé égal à l'angle θ de montage du cinémomètre 10. La ligne 12 de visée du cinémomètre 10 est donc parallèle au vecteur de vitesse V du véhicule 30. Mais ce principe n'est plus valable lorsque la route 100 présente une configuration de virage. Toutefois, l'écart entre l'angle β de mesure et l'angle θ de montage doit encore être inférieur à la valeur maximale d'écart angulaire pour que la mesure de vitesse soit valide.

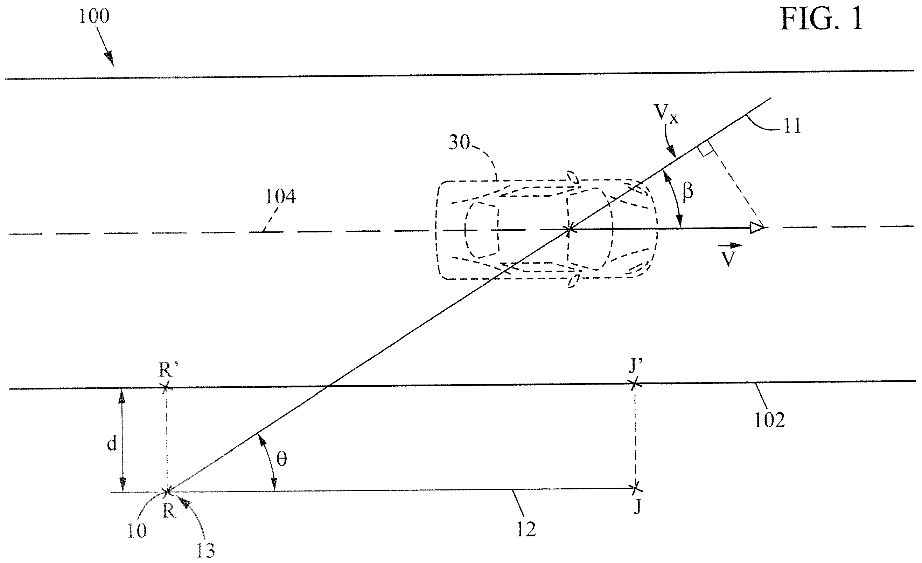

Il est tout d'abord rappelé le principe d'installation d'un cinémomètre 10 selon l'état de la technique, dans le cas où la direction longitudinale de la route 100 est droite, en référence à la figure 1. La route 100 comprend une seule voie de circulation dans l'exemple illustré, mais peut en comprendre plusieurs. Le véhicule 30 suit une ligne 104 de passage qui est rectiligne sur la route 100 et considérée comme sensiblement à mi-largeur de la voie, si bien que le vecteur de vitesse V du véhicule 30 est constamment colinéaire à la ligne 104 de passage.

Le cinémomètre 10 est placé à distance d'une bande 102 de rive de la route 100. En général, la configuration du terrain au bord de la route 100 peut guider le choix de l'emplacement du cinémomètre 10. La lettre R indique le point de placement du cinémomètre 10.

La distance d d'écartement latéral entre le cinémomètre 10 et la bande 102 de rive est alors mesurée perpendiculairement à et à partir de la bande 102 de rive. Ainsi, le point R' sur la figure 1 représente la projection orthogonale du point R sur la bande 102 de rive, et la distance d apparaît entre les points R et R'. En pratique, le point R' est matérialisé par une marque, telle qu'une borne de signalisation routière. Une deuxième marque est placée en un point noté J', sur la bande 102 de rive, à une distance prédéterminée de R', de préférence supérieure ou égale à 15 m. Une troisième marque est ensuite placée en un point J tel que la distance entre les points J' et J soit aussi égale à la distance d d'écartement latéral, mesurée perpendiculairement à la bande 102 de rive. La droite qui passe par les points R et J est alors parallèle à la ligne 104 de passage. Lorsque le cinémomètre 10 placé au point R est orienté pour que la ligne 12 de visée passe par le point J, alors l'angle β de mesure et l'angle θ de montage sont égaux en principe. La vitesse du véhicule 30 peut alors être obtenue en divisant le résultat de la mesure brute qui est fournie par le cinémomètre 10 par le cosinus de l'angle θ de montage. Une telle mesure est conforme aux recommandations rappelées en introduction, tant qu'un écart entre l'angle θ de montage et l'angle β de mesure est suffisamment faible, notamment inférieur à la valeur maximale d'écart angulaire, qui est prise égale à 0,5° dans la suite.

Ceci n'est plus le cas lorsque la route 100 décrit un virage, puisque la ligne 104 de passage du véhicule 30 change de direction entre le niveau du cinémomètre 10 le long de la route 100, et l'endroit auquel se trouve le véhicule 30 au moment de la mesure de sa vitesse. Dans la pratique, il peut être considéré que la route 100 forme un virage lorsque le rayon de courbure de la bande 102 de rive est inférieur à 10 km. Plus précisément, il peut être considéré que la route 100 forme un virage dépendamment du rayon de courbure de la bande 102 de rive et du nombre de voies qu'elle comporte. A titre d'exemple, on peut citer les valeurs limites de rayon de courbure suivantes :

- pour une route comportant une unique voie, un rayon de courbure de 3,8 km ;
- pour une route comportant deux voies, un rayon de courbure de 5, 4 km ;

- pour une route comportant trois voies, un rayon de courbure de 7,0 km ;
- pour une route comportant quatre voies, un rayon de courbure de 8,6 km.

La direction du vecteur de vitesse V du véhicule 30 n'est alors plus constante, mais est seulement tangente à la ligne 104 de passage à l'emplacement instantané du véhicule.

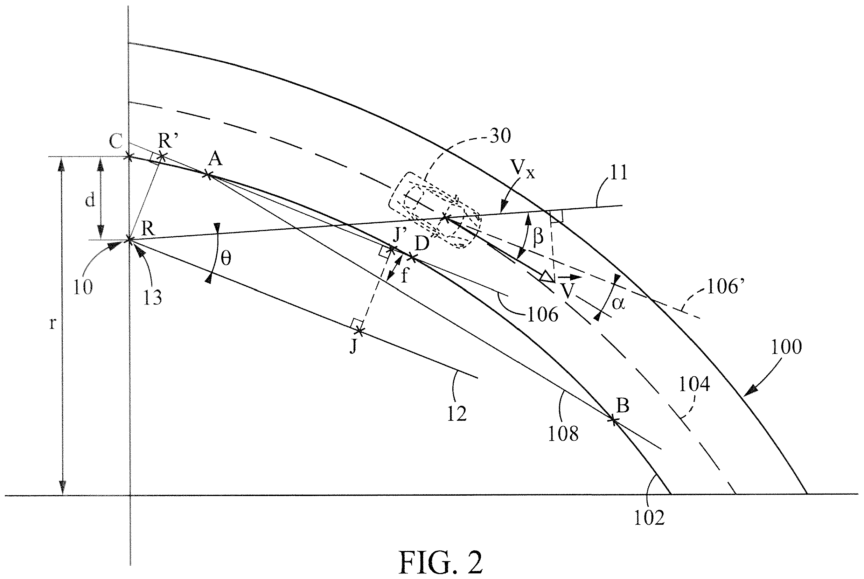

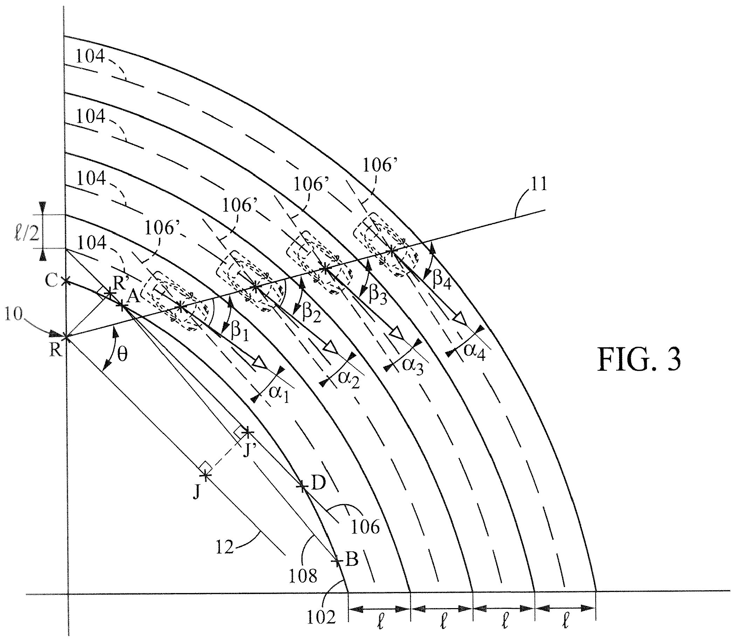

Si on applique la méthode précédente à une route qui forme un virage, un écart α angulaire apparaît entre l'angle θ de montage et l'angle β de mesure qui est supérieur à 0,5°. En effet, la ligne 12 de visée, passant encore par J, n'est plus parallèle à la ligne 104 de passage du véhicule 30 à l'endroit de la mesure de vitesse. Autrement dit, la droite qui est issue du point R et qui passe par le point J tel que défini précédemment ne peut plus être considérée comme repérant la direction longitudinale de la route 100 à l'endroit d'intersection de la ligne 104 de passage et de l'axe 11 radioélectrique. L'écart α angulaire qui apparaît ainsi entre l'angle θ de montage et l'angle β de mesure est représenté sur les figures 2 et 3 en étant très exagéré pour des raisons d'illustration, et ne correspond en aucun cas à une mesure d'angle réelle.

L'invention propose alors de construire un axe 106 de référence qui repère la direction longitudinale de la route 100, afin de placer le point J d'une façon qui est adaptée à la configuration en virage de la route 100. Une marque est alors encore placée au point J pour orienter vers celle-ci la ligne 12 de visée, en assurant que l'écart α entre l'angle θ de montage et l'angle β de mesure soit inférieur à 0,5°. L'axe 106 de référence est sensiblement tangent à la ligne 104 de passage à l'endroit d'intersection entre l'axe 11 radioélectrique et la ligne 104 de passage pour repérer la direction longitudinale de la route 100 à cet endroit. Le point J peut alors être placé de sorte que la ligne 12 de visée soit parallèle à la l'axe 106 de référence.

Une méthode qui est conforme à l'invention pour déterminer l'axe 106 de référence et placer le point J est maintenant décrite. Par simplicité mais de façon non limitative, on peut supposer que le rayon de courbure de la route 100 est sensiblement constant sur la portion de route considérée.

Il est tout d'abord décrit le cas où la route 100 ne comprend qu'une seule voie à surveiller, de largeur l, en référence à la figure 2.

L'opérateur qui est chargé d'installer le cinémomètre 10 peut le placer comme précédemment au point R, notamment en fonction de la configuration du terrain. La distance d d'écartement latéral entre le cinémomètre 10 au point R et la bande 102 de rive apparaît alors entre un point C et le point R, le point C étant une projection sensiblement radiale du point R sur la bande 102 de rive. En pratique, la mesure de la distance d entre les points R et C n'a pas besoin d'être très précise.

L'axe 106 de référence est ensuite déterminé, à partir de la valeur du rayon de courbure de la route 100. Cette valeur du rayon de courbure peut être obtenue de différentes façons, notamment d'après une carte géographique dont l'échelle est suffisante. Alternativement, la valeur du rayon de courbure peut être mesurée sur le terrain par l'opérateur, lors d'une étape préalable.

Pour cela, un point A initial peut d'abord être placé sur la bande 102 de rive. La position du point A initial le long de la bande 102 de rive est par exemple choisie telle qu'un angle entre une première ligne droite passant par les points C et R, et une seconde ligne droite passant par les points R et A, soit substantiellement complémentaire de l'angle θ de montage augmenté d'une demi-ouverture angulaire du faisceau de mesure. Par exemple, si l'angle θ de montage est égal à 25° et que l'ouverture angulaire du faisceau de mesure est de 10°, la position du point A pourra être choisie de sorte que la distance entre les points C et A soit sensiblement égale à la distance d d'écartement latéral, divisée par la valeur de tangente 30° :

$$CA = \frac{d}{\tan 30°}$$

La signification de cette formule est la suivante : si la route 100 était droite, le point A initial est le point d'entrée dans le faisceau de mesure du cinémomètre 10, sur la ligne 102 de rive. Ceci assure que, au moins pour des rayons de courbure qui ne sont pas trop petits, le rayon de courbure est mesuré par l'opérateur dans une zone de la route 100 où sera mesurée la vitesse du véhicule 30.

L'opérateur choisit une longueur de corde 108, de manière à placer un deuxième point B sur la bande 102 de rive, tel que la distance entre le point A initial et le point B corresponde à la longueur de corde choisie. Cette longueur de corde peut dépendre en pratique d'une valeur approximative qui est connue initialement de l'opérateur pour le rayon de courbure, afin d'obtenir une précision suffisante pour la mesure de ce rayon de courbure.

La corde 108 qui est ainsi construite peut avoir deux fonctions.

Une première fonction peut être de vérifier l'hypothèse selon laquelle le rayon de courbure du virage de la route 100 est sensiblement constant. A cet effet, des écarts entre la bande 102 de rive et la corde 108 peuvent être mesurés en plusieurs points de la corde, par exemple en six points séparés régulièrement de 1 m le long de la corde 108. On peut alors vérifier que les variations entre les écarts qui sont mesurés sont compatibles avec un rayon de courbure qui est constant.

La deuxième fonction de la corde 108 est la détermination de l'axe 106 de référence. Pour cela, la valeur de flèche f sur la corde 108, entre les points A et B, est mesurée. Elle pourra être déduite de la validation de l'hypothèse selon laquelle le rayon de courbure est sensiblement constant, la flèche f à considérer pouvant être le plus grand des écarts mesurés aux différents points le long de la corde 108, jusqu'à la bande 102 de rive.

La valeur du rayon de courbure du virage de la route 100 peut alors être déduite de la longueur de la corde 108 et de la valeur de la flèche f qui est obtenue.

L'opérateur peut alors déterminer l'axe 106 de référence en fonction de cette valeur du rayon de courbure, en consultant un abaque ou une table dont le rayon de courbure de la route constitue l'une des entrées. De façon équivalente, la valeur de la flèche f pour une longueur donnée de la corde 108 peut constituer directement l'entrée de la table. Des entrées supplémentaires de la table peuvent être la largeur l de chaque voie de la route 100, la distance d d'écartement latéral, et/ou le nombre de voies de la route 100. Un tel abaque ou une telle table peut être disponible pour l'opérateur sous forme matérielle, par exemple dans une notice d'installation du cinémomètre, ou sous forme enregistrée et accessible par des moyens d'interrogation informatiques.

L'axe 106 de référence peut être caractérisé géométriquement de différentes façons lors de cette détermination. Par exemple, il peut être caractérisé à partir d'un point de référence qui est fixé sur la ligne 102 de rive, et en sélectionnant un autre point de la ligne 102 de rive, noté D, tel que la droite qui relie ces deux points soit l'axe 106 de référence, qui est parallèle à la ligne 104 de passage à l'endroit de la mesure de vitesse. L'angle β de mesure est simultanément sensiblement égal à l'angle θ de montage, avec un écart α angulaire qui est inférieur à 0,5°.

Le même point de référence a été utilisé préalablement pour établir la table ou l'abaque qui est fournie à l'opérateur, et est repris par ce dernier pour déterminer l'axe 106 de référence.

Pratiquement, le point A initial qui a déjà été utilisé pour déterminer le rayon de courbure de la route 100 peut être repris pour constituer le point de référence qui est maintenant utilisé pour déterminer l'axe 106 de référence.

Le point D peut être fourni par la table ou l'abaque par l'intermédiaire de la valeur de la longueur de la corde qui relie les points A et D. A partir du point de référence A, il est alors facile pour l'opérateur de déterminer sur la ligne 102 de rive la position du point D qui vérifie la longueur de corde lue dans la table ou l'abaque.

La droite qui passe par les points A et D forme ainsi l'axe 106 de référence, sensiblement parallèle à la direction du vecteur de vitesse V du véhicule 30. Autrement dit, la droite qui passe par les points A et D est sensiblement parallèle à la tangente à la ligne 104 de passage à l'endroit d'intersection de cette dernière avec l'axe 11 radioélectrique, de manière à repérer la direction longitudinale de la route 100.

La construction d'un point J, par lequel passera la ligne 12 de visée pour orienter en rotation le cinémomètre 10, peut ensuite être mise en oeuvre d'une manière qui est sensiblement similaire au cas de la ligne droite, mais à partir de l'axe 106 de référence.

Ainsi, une projection orthogonale du point R sur l'axe 106 de référence, à l'aide par exemple d'un décamètre, donne un point qui est noté R' et peut être matérialisé par une marque dédiée. La distance entre les points R et R' est alors mesurée précisément. La position du point R peut être validée en vérifiant, toujours à l'aide du décamètre, que le cercle de centre R et de rayon RR' est tangent à l'axe 106 de référence au point R'.

Un point J', qui peut également être matérialisé par une autre marque, est alors placé sur l'axe 106 de préférence à une distance du point R' supérieure ou égale à 10 m, voire 15 m afin de minimiser des erreurs géométriques de report ou de pointage. Puis le point J est placé au droit du point J' par rapport à la droite qui passe par les points R' et J', sur le bord de la route 100 du côté du cinémomètre 10, de sorte que la distance entre les points J' et J soit égale à celle entre les points R et R'. De même que pour le point R', la position du point J pourra être validée en vérifiant que le cercle de centre J et de rayon JJ' est tangent à l'axe 106 de référence au point J'. La droite qui passe par les points R et J est ainsi parallèle à l'axe 106 de référence.

L'opérateur peut ensuite viser le point J, repéré par une marque appropriée, avec le système 13 de visée pour orienter le cinémomètre 10 de manière adéquate : la ligne 12 de visée est alors parallèle à l'axe 106 de référence.

Avantageusement, les opérations consistant à placer le point D, le point R, le point R' puis le point J, ainsi que les étapes de validation de la position des points R et J, pourront être répétées une deuxième fois, afin notamment de diminuer l'incertitude sur la position du point J.

L'écart $\alpha$ entre l'angle $\theta$ de montage et l'angle $\beta$ de mesure est alors inférieur à 0,5°, conformément aux recommandations pour valider la mesure de la vitesse. A des fins de compréhension, on a tracé sur les figures 2 et 3, à l'endroit d'intersection entre la l'axe 11 radioélectrique et la ligne 104 de passage, une droite 106' qui est parallèle à l'axe 106 de référence pour montrer l'écart angulaire $\alpha$.

L'opération de construction des points A et D qui a été décrite ci-dessus, et plus précisément l'obtention de la valeur de la longueur entre ces points, permet de minimiser l'écart $\alpha$ entre l'angle $\theta$ de montage et l'angle $\beta$ de mesure. En effet, cet écart $\alpha$ angulaire dépend de la position des points A et D, et de l'endroit d'intersection entre l'axe 11 radioélectrique et la ligne 104 de passage.

En d'autres termes, l'écart $\alpha$ angulaire dépend notamment des paramètres suivants :

- du rayon de courbure du virage, qui peut avoir été estimé grâce à la mesure de la flèche f à partir de la corde 108,

- de la distance d d'écartement latéral entre le cinémomètre 10 et la bande 102 de rive, qui a été mesurée, et/ou

- de la largeur l de la voie à surveiller, qui est aisèment mesurable par l'opérateur.

Par conséquent, à partir de la position fixée et connue du point A initial et de la connaissance de ces paramètres, il est possible d'optimiser la longueur en ligne droite entre le point A et le point D de manière à minimiser l'écart $\alpha$ angulaire. Les solutions d'une telle optimisation peuvent être consignées dans des tables ou abaques en fonction des paramètres précités. Dès lors, l'opérateur, à partir de la mesure ou de la connaissance de ces paramètres, peut installer le cinémomètre 10 de manière fiable pour que l'écart $\alpha$ angulaire demeure inférieur à 0,5°.

Une incertitude sur l'écart angulaire $\alpha$ peut être calculée pour prendre en compte des incertitudes qui affectent les paramètres d'entrée qui sont mesurés par l'opérateur. Ainsi, l'axe 106 de référence peut être déterminé de sorte que la somme de l'écart $\alpha$ d'une part et d'une incertitude composée élargie, notée U($\alpha$), d'autre part, soit inférieure à 0,5°. L'incertitude composée élargie U($\alpha$) prend notamment en compte les incertitudes sur la mesure des paramètres dont dépend l'écart $\alpha$ angulaire. Ainsi, l'optimisation de la distance entre les points A et D peut être déterminée par la somme de l'écart $\alpha$ et de l'incertitude composée élargie U($\alpha$). L'incertitude composée élargie U($\alpha$) correspond au produit d'une incertitude composée par un coefficient k de niveau de confiance. En pratique, en prenant le coefficient k égal à 2, le niveau de confiance obtenu est satisfaisant, proche de 95,45%.

Lorsque la route 100 comprend plusieurs voies qui sont adjacentes et ont chacune une largeur l qui est sensiblement égale d'une voie à l'autre, par exemple quatre voies comme représenté sur la figure 3, la longueur qui est sélectionnée entre les points A et D peut également tenir compte du nombre de voies. Dans ce qui suit, on ajoute l'indice i correspondant au numéro de la voie considérée pour les paramètres qui la concernent. En l'occurrence sur la figure 3, i = 1,...,4. Le cinémomètre 10 peut être installé selon l'invention pour mesurer les vitesses de véhicules qui circulent sur l'une quelconque de ces quatre voies, avec la même position et la même orientation du cinémomètre 10 qui convient simultanément pour les quatre voies.

L'endroit d'intersection entre l'axe radioélectrique 11 et la ligne 104 de passage dépend de la voie à surveiller. L'angle $\beta_i$ de mesure diffère selon la voie i considérée, et, par conséquent, l'écart angulaire correspondant, noté $\alpha_i$, varie aussi en fonction de la voie.

L'optimisation de la distance entre les points A et D peut alors tenir compte du nombre des voies et de leur largeur l pour minimiser l'ensemble des écarts angulaires $\alpha_i$ lors de l'installation du cinémomètre 10. De façon générale, les écarts angulaires $\alpha_i$ peuvent varier entre deux voies différentes de la route 100. En pratique, cela se traduit par l'entrée supplémentaire dans la table qui est à disposition de l'opérateur, pour indiquer le nombre de voies. La valeur qui est fournie par la table pour la longueur entre les points A et D peut en effet varier en fonction du nombre de voies.

De même que précédemment, une incertitude $u(\alpha_i)$ et un coefficient k de niveau de confiance peuvent être introduits : l'axe 106 de référence est alors déterminé de sorte que, pour chaque ligne 104 de passage de véhicule sur la route 100, une somme de l'écart $\alpha_i$ entre l'angle $\beta_i$ de mesure et l'angle $\theta$ de montage d'une part, et de l'incertitude $u(\alpha_i)$ composée multipliée par le coefficient k de niveau de confiance d'autre part, soit inférieure à 0,5°.

Le procédé d'installation du cinémomètre 10 permet ainsi de mesurer la vitesse des véhicules dans un virage, quelque soit le nombre de voies, de manière fiable et conformément aux recommandations en vigueur.

**Revendications**

1. Procédé d'installation d'un cinémomètre (10) sur une route (100) comportant au moins une voie, ledit cinémomètre ayant un axe (11) radioélectrique pour mesurer une vitesse d'au moins un véhicule (30) circulant sur ladite voie de la route (100) et coupant un faisceau de mesure réparti autour dudit axe (11) radioélectrique, et le cinémomètre (10) étant rigidement solidaire d'un système (13) de visée ayant une ligne (12) de visée qui forme un angle ($\theta$) de montage fixe avec ledit axe (11) radioélectrique, le procédé comprenant les étapes suivantes :

/1/ obtenir une valeur maximale d'écart angulaire ;
/2/ placer le cinémomètre (10) à une distance d'écartement latéral par rapport à une bande (102) de rive de la route (100) ;
/3/ placer au moins une marque (J) sur le bord de la route (100) à une distance supérieure à 15 mètres du cinémomètre (10) ; et
/4/ orienter le cinémomètre (10) de sorte que la ligne (12) de visée passe par ladite au moins une marque (J), et l'axe (11) radioélectrique formant alors un angle ($\beta$) de mesure avec une ligne (104) de passage du véhicule (30) sur la voie de la route (100) à un endroit d'intersection entre ledit axe (11) radioélectrique et ladite ligne (104) de passage,

le procédé étant **caractérisé en ce que** la route (100) forme un virage tel qu'un écart ($\alpha$) entre l'angle de mesure ($\beta$) et l'angle de montage ($\theta$) serait supérieur la valeur maximale d'écart angulaire si ladite au moins une marque (J) était placée à la même distance d'écartement latéral que le cinémomètre (10) par rapport à la bande (102) de rive, et **en ce que** le procédé comprend, préalablement à l'étape /3/, une étape de détermination d'un axe (106) de référence pour repérer une direction longitudinale de la route (100) à l'endroit d'intersection entre ledit axe (11) radioélectrique et ladite ligne (104) de passage, en fonction du rayon de courbure du virage, et la marque (J) est placée à l'étape /3/ de sorte qu'à l'étape /4/, lorsque la ligne (12) de visée passe par ladite marque (J), ladite ligne de visée est parallèle à l'axe (106) de référence et l'écart ($\alpha$) entre l'angle ($\beta$) de mesure et l'angle ($\theta$) de montage devient inférieur à la valeur maximale d'écart angulaire.

2. Procédé d'installation selon la revendication 1, suivant lequel la direction longitudinale de la route à l'endroit d'intersection entre ledit axe (11) radioélectrique et ladite ligne (104) de passage est repérée par la tangente à la ligne (104) de passage audit endroit d'intersection.

3. Procédé d'installation selon la revendication 1, suivant lequel la route (100) comporte plusieurs voies de circulation adjacentes dans lesquelles les vitesses de véhicules sont destinées à être mesurées, et suivant lequel l'étape de détermination de l'axe (106) de référence comprend une opération d'optimisation dans laquelle l'écart ($\alpha_i$) entre l'angle ($\theta$) de montage et l'angle ($\beta_i$) de mesure est inférieur à la valeur maximale d'écart angulaire simultanément pour plusieurs lignes (104) de passage de véhicules contenues respectivement dans certaines au moins des voies de circulation.

4. Procédé d'installation selon la revendication 3, suivant lequel la route (100) comporte au moins quatre voies de circulation adjacentes dans lesquelles les vitesses de véhicules sont destinées à être mesurées, et suivant lequel l'axe (106) de référence est déterminé de sorte que l'écart ($\alpha_i$) entre l'angle ($\theta$) de montage et l'angle ($\beta_i$) de mesure soit inférieur à la valeur maximale d'écart angulaire simultanément pour plusieurs lignes (104) de passage de véhicules contenues respectivement dans certaines au moins des voies de circulation.

5. Procédé d'installation selon l'une quelconque des revendications précédentes, suivant lequel l'étape de détermination de l'axe (106) de référence comprend, pour chaque ligne de passage de véhicule sur la route (100), la détermination d'une somme de l'écart ($\alpha$) entre l'angle ($\beta$) de mesure et l'angle ($\theta$) de montage d'une part, et d'une incertitude composée élargie correspondant au produit d'une incertitude composée par un coefficient (k) de niveau de confiance d'autre part, cette somme étant inférieure à la valeur maximale d'écart angulaire.

6.  Procédé d'installation selon l'une quelconque des revendications précédentes, suivant lequel ladite au moins une marque (J) comprend une marque (J) unique.

7.  Procédé d'installation selon l'une quelconque des revendications précédentes, suivant lequel un rayon de courbure du virage est inférieur à 3,8 km, 5,4 km, 7,0 km ou 8,6 km respectivement lorsque la route comporte une seule voie, deux voies, trois voies ou quatre voies dans lesquelles la vitesse du véhicule est destinée à être mesurée.

8.  Procédé d'installation selon l'une quelconque des revendications précédentes, suivant lequel l'étape de détermination de l'axe (106) de référence comprend une opération de construction de deux points (A, D), lesdits deux points (A, D) étant placés sur la bande de rive (102), un premier point (A) initial étant préalablement placé, une distance entre lesdits deux points étant sélectionnée en fonction du rayon de courbure du virage, ou en fonction d'une valeur de grandeur représentative dudit rayon de courbure.

9.  Procédé selon la revendication 8, suivant lequel, dans l'opération de construction des deux points (A, D), la distance entre lesdits deux points est sélectionnée en fonction du nombre de voies de la route (100).

10. Procédé selon la revendication 8 ou 9, suivant lequel l'axe (106) de référence est déterminé à partir du point (A) initial situé sur la bande (102) de rive, tel qu'un angle entre d'une part une première direction perpendiculaire à la bande (102) de rive et passant par le cinémomètre (10) et d'autre part une seconde direction passant par le cinémomètre (10) et le point (A) initial soit substantiellement complémentaire de l'angle (θ) de montage augmenté d'une demi-ouverture angulaire du faisceau de mesure.

11. Procédé d'installation selon l'une quelconque des revendications précédentes, comprenant une étape préalable de détermination du rayon de courbure du virage de la route (100), à partir d'une mesure d'une flèche (f) entre la bande de rive (102) et une corde (108) de ladite bande de rive (102) dans le virage.

12. Procédé selon la revendication 11 lorsqu'elle dépend de la revendication 10, suivant lequel la corde (108) passe par le point (A) initial.

13. Procédé d'installation selon l'une quelconque des revendications précédentes, suivant lequel l'angle (θ) de montage entre la ligne de visée (12) du système de visée (13) et l'axe radioélectrique (11) du cinémomètre (10) est compris entre 20° et 30°.

14. Procédé de mesure d'une vitesse d'un véhicule (30) circulant sur une route (100), comprenant les étapes suivantes :

    - installer un cinémomètre (10) en utilisant un procédé d'installation conforme à l'une quelconque des revendications précédentes ; et
    - réaliser la mesure de vitesse en utilisant le cinémomètre (10) tel que placé à l'étape /2/ du procédé d'installation et orienté à l'étape /4/ dudit procédé d'installation.

**Patentansprüche**

1.  Verfahren zur Installation einer Geschwindigkeitsmesseinrichtung (10) an einer Straße (100), die wenigstens eine Fahrspur umfasst, wobei die Geschwindigkeitsmesseinrichtung eine radioelektrische Achse (11) zum Messen einer Geschwindigkeit wenigstens eines Fahrzeugs (30) aufweist, das auf der Fahrspur der Straße (100) fährt und ein um die radioelektrische Achse (11) herum verteiltes Messbündel unterbricht, und wobei die Geschwindigkeitsmesseinrichtung (10) mit einem Visiersystem (13) starr fest verbunden ist, das eine Visierlinie (12) aufweist, welche einen festen Montagewinkel (θ) mit der radioelektrischen Achse (11) bildet,
    wobei das Verfahren die folgenden Schritte umfasst:

    /1/ Gewinnen eines maximalen Wertes der Winkelabweichung;
    /2/ Anordnen der Geschwindigkeitsmesseinrichtung (10) in einem seitlichen Abstand in Bezug auf einen Randstreifen (102) der Straße (100);
    /3/ Anbringen wenigstens einer Markierung (J) am Rand der Straße (100) in einem Abstand von mehr als 15 Metern von der Geschwindigkeitsmesseinrichtung (10); und
    /4/ Ausrichten der Geschwindigkeitsmesseinrichtung (10) derart, dass die Visierlinie (12) durch die wenigstens eine Markierung (J) verläuft, und wobei die radioelektrische Achse (11) dann einen Messwinkel (β) mit einer Linie (104) der Vorbeifahrt des Fahrzeugs (30) auf der Fahrspur der Straße (100) an einem Schnittpunkt zwischen der radioelektrischen Achse (11) und der Linie (104) der Vorbeifahrt bildet,

    wobei das Verfahren **dadurch gekennzeichnet ist, dass** die Straße eine solche Kurve bildet, dass eine Abweichung (α) zwischen dem Messwinkel (β) und dem Montagewinkel (θ) größer als der maximale Wert der Winkelabweichung wäre, wenn die wenigstens eine Markierung (J) in demselben seitlichen Abstand in Bezug auf den Randstreifen (102) angeordnet würde wie die Geschwindigkeitsmesseinrichtung (10),

und dadurch, dass das Verfahren vor dem Schritt /3/ einen Schritt der Bestimmung einer Referenzachse (106), um eine Längsrichtung der Straße (100) an dem Schnittpunkt zwischen der radioelektrischen Achse (11) und der Linie (104) der Vorbeifahrt zu bezeichnen, in Abhängigkeit vom Krümmungsradius der Kurve umfasst und die Markierung (J) im Schritt /3/ derart angebracht wird, dass im Schritt /4/, wenn die Visierlinie (12) durch die Markierung (J) verläuft, die Visierlinie parallel zu der Referenzachse (106) ist und die Abweichung ($\alpha$) zwischen dem Messwinkel ($\beta$) und dem Montagewinkel ($\theta$) kleiner als der maximale Wert der Winkelabweichung wird.

2. Verfahren zur Installation nach Anspruch 1, wobei die Längsrichtung der Straße am Schnittpunkt zwischen der radioelektrischen Achse (11) und der Linie (104) der Vorbeifahrt durch die Tangente an die Linie (104) der Vorbeifahrt in dem Schnittpunkt bezeichnet wird.

3. Verfahren zur Installation nach Anspruch 1, wobei die Straße (100) mehrere benachbarte Fahrspuren umfasst, auf denen die Geschwindigkeiten von Fahrzeugen gemessen werden sollen, und wobei der Schritt der Bestimmung der Referenzachse (106) einen Arbeitsgang der Optimierung umfasst, bei welchem die Abweichung ($\alpha_i$) zwischen dem Montagewinkel ($\theta$) und dem Messwinkel ($\beta_i$) gleichzeitig für mehrere Linien (104) der Vorbeifahrt von Fahrzeugen, die wenigstens in einigen jeweiligen Fahrspuren enthalten sind, kleiner als der maximale Wert der Winkelabweichung ist.

4. Verfahren zur Installation nach Anspruch 3, wobei die Straße (100) wenigstens vier benachbarte Fahrspuren umfasst, auf denen die Geschwindigkeiten von Fahrzeugen gemessen werden sollen, und wobei die Referenzachse (106) derart bestimmt wird, dass die Abweichung ($\alpha_i$) zwischen dem Montagewinkel ($\theta$) und dem Messwinkel ($\beta_i$) gleichzeitig für mehrere Linien (104) der Vorbeifahrt von Fahrzeugen, die wenigstens in einigen jeweiligen Fahrspuren enthalten sind, kleiner als der maximale Wert der Winkelabweichung ist.

5. Verfahren zur Installation nach einem der vorhergehenden Ansprüche, wobei der Schritt der Bestimmung der Referenzachse (106) für jede Linie der Vorbeifahrt eines Fahrzeugs auf der Straße (100) die Bestimmung einer Summe der Abweichung ($\alpha$) zwischen dem Messwinkel ($\beta$) und dem Montagewinkel ($\theta$) einerseits und einer vergrößerten zusammengesetzten Unsicherheit, die dem Produkt einer zusammengesetzten Unsicherheit und eines Konfidenzniveau-Koeffizienten (k) entspricht, andererseits umfasst, wobei diese Summe kleiner als der maximale Wert der Winkelabweichung ist.

6. Verfahren zur Installation nach einem der vorhergehenden Ansprüche, wobei die wenigstens eine Markierung (J) eine einzige Markierung (J) umfasst.

7. Verfahren zur Installation nach einem der vorhergehenden Ansprüche, wobei ein Krümmungsradius der Kurve kleiner als 3,8 km, 5,4 km, 7,0 km oder 8,6 km ist, wenn die Straße eine einzige Fahrspur, zwei Fahrspuren, drei Fahrspuren bzw. vier Fahrspuren umfasst, auf denen die Geschwindigkeit des Fahrzeugs gemessen werden soll.

8. Verfahren zur Installation nach einem der vorhergehenden Ansprüche, wobei der Schritt der Bestimmung der Referenzachse (106) einen Arbeitsgang der Konstruktion von zwei Punkten (A, D) umfasst, wobei die zwei Punkte (A, D) auf dem Randstreifen (102) angeordnet werden, wobei ein anfänglicher erster Punkt (A) im Voraus gewählt wird, wobei ein Abstand zwischen den zwei Punkten in Abhängigkeit vom Krümmungsradius der Kurve oder in Abhängigkeit von einem Wert einer Größe, die für den Krümmungsradius repräsentativ ist, gewählt wird.

9. Verfahren nach Anspruch 8, wobei bei dem Arbeitsgang der Konstruktion von zwei Punkten (A, D) der Abstand zwischen den zwei Punkten in Abhängigkeit von der Anzahl der Fahrspuren der Straße (100) gewählt wird.

10. Verfahren nach Anspruch 8 oder 9, wobei die Referenzachse (106) ausgehend von dem Anfangspunkt (A), der sich auf dem Randstreifen (102) befindet, derart bestimmt wird, dass ein Winkel zwischen einerseits einer ersten Richtung, die zu dem Randstreifen (102) senkrecht ist und durch die Geschwindigkeitsmesseinrichtung (10) verläuft, und andererseits einer zweiten Richtung, die durch die Geschwindigkeitsmesseinrichtung (10) und den Anfangspunkt (A) verläuft, im Wesentlichen komplementär zu dem um einen Öffnungshalbwinkel des Messbündels vergrößerten Montagewinkel ($\theta$) ist.

11. Verfahren zur Installation nach einem der vorhergehenden Ansprüche, welches einen vorausgehenden Schritt der Bestimmung des Krümmungsradius der Kurve der Straße (100) ausgehend von einer Messung einer Segmenthöhe (f) zwischen dem Randstreifen (102) und einer Sehne (108) des Randstreifens (102) in der Kurve umfasst.

12. Verfahren nach Anspruch 11, wenn abhängig von Anspruch 10, wobei die Sehne (108) durch den Anfangspunkt (A) verläuft.

**13.** Verfahren zur Installation nach einem der vorhergehenden Ansprüche, wobei der Montagewinkel ($\theta$) zwischen der Visierlinie (12) des Visiersystems (13) und der radioelektrischen Achse (11) der Geschwindigkeitsmesseinrichtung (10) zwischen 20° und 30° liegt.

**14.** Verfahren zur Messung einer Geschwindigkeit eines Fahrzeugs (30), das auf einer Straße (100) fährt, die folgenden Schritte umfassend:

- Installieren einer Geschwindigkeitsmesseinrichtung (10) unter Anwendung eines Verfahrens zur Installation gemäß einem der vorhergehenden Ansprüche; und
- Durchführen der Geschwindigkeitsmessung unter Verwendung der Geschwindigkeitsmesseinrichtung (10), wobei diese wie in Schritt /2/ des Verfahrens zur Installation angeordnet ist und wie in Schritt /4/ des Verfahrens zur Installation ausgerichtet ist.

**Claims**

**1.** Method for installation of a speed-detection device (10) on a road (100) having at least one lane, said speed-detection device having a radioelectric axis (11) for measuring a speed of at least one vehicle (30) traveling along said lane of the road (100) and intersecting a measurement beam distributed around said radioelectric axis (11), and the speed-detection device (10) being rigidly secured to a sighting system (13) having a line of sight (12) which forms a fixed mounting angle ($\theta$) with said radioelectric axis (11),

the method comprising the steps of:

/1/ obtaining a maximum angular deviation value;
/2/ placing the speed-detection device (10) at a lateral spacing distance from an edge line (102) of the road (100);
/3/ placing at least one mark (J) on the side of the road (100) at a distance of more than 15 meters from the speed-detection device (10); and
/4/ orienting the speed-detection device (10) so that the line (12) of sight passes through said at least one mark (J), the radioelectric axis (11) then forming a measurement angle ($\beta$) with a line (104) of passage of the vehicle (30) on the lane of the road (100) at a point of intersection between said radioelectric axis (11) and said line (104) of passage,

the method being **characterized in that** the road (100) forms a curve such that a difference ($\alpha$) between the measurement angle ($\beta$) and the mounting angle ($\theta$) would exceed the maximum angular deviation value if said at least one mark (J) was placed at the same lateral spacing distance as the speed-detection device (10) relative to the edge line (102), and **in that** the method comprises, prior to step /3/, a step of determining an axis (106) of reference for identifying a longitudinal direction of the road (100) at the point of intersection between said radioelectric axis (11) and said line (104) of passage, based on the radius of curvature of the curve, and the mark (J) is placed in step /3/ so that in step /4/, when the line (12) of sight passes through said mark (J), said line of sight is parallel to the axis (106) of reference and the difference ($\alpha$) between the measurement angle ($\beta$) and the mounting angle ($\theta$) becomes smaller than the maximum angular deviation value.

**2.** Installation method according to claim 1, wherein the longitudinal direction of the road at the point of intersection between said radioelectric axis (11) and said line (104) of passage is identified by the tangent to the line (104) of passage at said point of intersection.

**3.** Installation method according to claim 1, wherein the road (100) comprises multiple adjacent lanes in which vehicle speeds are to be measured, and wherein the step of determining the axis (106) of reference comprises an optimization process in which the difference ($\alpha_i$) between the mounting angle ($\theta$) and the measurement angle ($\beta_i$) is less than the maximum angular deviation value simultaneously for multiple lines (104) of passage of vehicles respectively contained in at least some of the lanes.

**4.** Installation method according to claim 3, wherein the road (100) comprises at least four adjacent lanes in which vehicle speeds are to be measured, and wherein the axis (106) of reference is determined such that the difference ($\alpha_i$) between the mounting angle ($\theta$) and the measurement angle ($\beta_i$) is less than the maximum angular deviation value simultaneously for multiple lines (104) of passage of vehicles respectively contained in at least some of the lanes.

**5.** Installation method according to any one of the preceding claims, wherein the step of determining the axis (106) of reference comprises, for each line of passage of vehicles on the road (100), the determination of a sum of the difference ($\alpha$) between the measurement angle ($\beta$) and the mounting angle ($\theta$), and of an expanded combined uncertainty corresponding to the product of a combined uncertainty and a confidence level coefficient (k), this sum being less than the maximum angular deviation value.

**6.** Installation method according to any one of the preceding claims, wherein said at least one mark (J) comprises one single mark (J).

7. Installation method according to any one of the preceding claims, wherein a radius of curvature of the curve is less than 3.8 km, 5.4 km, 7.0 km, or 8.6 km respectively when the road has one, two, three, or four lanes in which vehicle speed is to be measured.

8. Installation method according to any one of the preceding claims, wherein the step of determining the axis (106) of reference comprises a process of constructing two points (A, D), said two points (A, D) being placed on the edge line (102), a first initial point (A) being placed beforehand, a distance between said two points being selected as a function of the radius of curvature of the curve or as a function of a magnitude value representative of said radius of curvature.

9. Method according to claim 8, wherein, in the process of constructing the two points (A, D), the distance between said two points is selected as a function of the number of lanes of the road (100).

10. Method according to claim 8 or 9, wherein the axis (106) of reference is determined from the initial point (A) located on the edge line (102), such that an angle between a first direction perpendicular to the edge line (102) and passing through the speed-detection device (10) and a second direction passing through the speed-detection device (10) and the initial point (A) is substantially complementary to the mounting angle (θ) increased by a one-half angular aperture of the measurement beam.

11. Installation method according to any one of the preceding claims, comprising a prior step of determining the radius of curvature of the curve in the road (100), from a measurement of a deflection (f) between the edge line (102) and a chord (108) of said edge line (102) in the curve.

12. Method according to claim 11 when dependent on claim 10, wherein the chord (108) passes through the initial point (A).

13. Installation method according to any one of the preceding claims, wherein the mounting angle (θ) between the line of sight (12) of the sighting system (13) and the radioelectric axis (11) of the speed-detection device (10) is between 20° and 30°.

14. Method for measuring a speed of a vehicle (30) traveling on a road (100), comprising the steps of:

- installing a speed-detection device (10) by using an installation method according to any one of the preceding claims; and

- performing the speed measurement using the speed-detection device (10) as placed in step /2/ of the installation method and as oriented in step /4/ of said installation method.

FIG. 1

FIG. 2

FIG. 3

EP 2 875 385 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2949896

**Littérature non-brevet citée dans la description**

- Guide OIML G 1-100. *Organisation Internationale de Métrologie Légale,* 2008